# EUROPÄISCHE PATENTANMELDUNG

(11) **EP 1 000 888 A1**
(43) Veröffentlichungstag der Anmeldung: **17.05.2000**
(21) Anmeldenummer: 99120793.7
(22) Anmeldetag: 20.10.1999
(51) Int. Cl.: B65G 65/48

(54) **Dosierer zur Zufuhr von Material in eine Be- bzw. Verarbeitungsanlage**

(30) Priorität: 22.10.1998 DE 19848686
(71) Anmelder: Göldner, Helmut, 31633 Leese (DE)
(72) Erfinder: Göldner, Helmut, 31633 Leese (DE)
(74) Vertreter: Braun, Dieter, Dipl.-Ing.

(57) **Zusammenfassung**

Die Erfindung betrifft einen Dosierer (1) zur Zufuhr von Material, insbesondere von Feststoffen, in eine Anlage zur Be- und/oder Verarbeitung des zugeführten Materials, mit einer Grundplatte (2), die eine Öffnung (3) aufweist, und einem oberhalb der Öffnung (3) angeordneten Dosierrotor (4) mit einem oder mehreren Flügeln (7, 8), deren jeweiliges äußeres Ende einer kreisförmig angeordneten Wandung (9) gegenüberliegt. Der Dosierer (4) ist dadurch gekennzeichnet, daß jeder Flügel (7, 8) des Dosierrotors (4) eine konkav gekrümmte Seitenkante (7', 7'', 8', 8'') aufweist, die bei Drehung des Dosierrotors (4) auf das zuzuführende Material Kräfte ausübt. Auf diese Weise wird Material von der Wandung (9) und der Drehachse des Dosierrotors (4) ferngehalten, wodurch eine sichere Funktion des Dosierers (4) gewährleistet wird.

## Beschreibung

Diese Erfindung betrifft einen Dosierer zur Zufuhr von Material, insbesondere von Feststoffen, in eine Anlage zur Be- und/oder Verarbeitung des zugeführten Materials, wobei der Dosierer eine Grundplatte mit einer Öffnung aufweist, und ferner einen oberhalb der Öffnung angeordneten Dosierrotor mit einem oder mehreren Flügeln, deren jeweiliges äußeres Ende einer kreisförmig angeordneten Wandung gegenüberliegt.

Um loses Material, insbesondere Material, das primär aus Feststoffen besteht, einer Anlage zuzuführen, in der das Material bearbeitet bzw. behandelt oder verarbeitet wird, ist es in der Regel notwendig, die Zufuhr mit Hilfe eines Dosierers quantitativzu steuern.

Bekannt sind Dosierer mit mehrflügeligen Rotoren, bei denen die Flügel geradlinige Seitenkanten besitzen. Bei dieser Form der Flügelflügel wird das Material in dem Dosierer bei Drehung des Rotors auch in radialer Richtung, also von der Drehachse zu einer Wandung des Dosierers, geschoben, da stets auch eine radiale Kraftkomponente von den Flügelflügeln auf das Material ausgeübt wird. Dies führt zu einer unerwünschten Ansammlung des Materials am Rand des Dosierers und kann u. U. auch die Drehung des Dosierrotors behindern, im ungünstigsten Fall sogar zu einem Stillstand des Dosierrotors führen, indem sich Materialteile zwischen dem bzw. den Enden des Dosierrotors und der Wandung festsetzen.

Der Erfindung liegt daher die Aufgabe zugrunde, einen Dosierer zur Verfügung zu stellen, der einer Ansammlung von Material an dem bzw. den Enden des sich drehenden Dosierrotors entgegenwirkt.

Diese Aufgabe wird durch die Merkmale des Anspruchs 1 gelöst.

Dadurch, daß jeder Flügel des Dosierrotors jeweils eine konkav gekrümmte Seitenkante aufweist, die bei Drehung des Dosierrotors auf das zuzuführende Material Kräfte ausübt, ist erreicht, daß die Kräfte derartig sind, daß das zuzuführende Material die Neigung haben wird, in Bezug auf die Drehachse des Dosierrotors die radiale Position einzunehmen, bei der die konkave Wölbung des jeweiligen Rotorfügels bezogen auf die Längsachse des Dosierrotors den tiefsten Punkt besitzt. Bewirktwird dies durch Kräfte, die durch den Anstieg der Seitenkante in Bezug aufdie Längsachse des Dosierrotors auf das geschobene Material ausgeübt werden. Vorzugsweise ist diese konkave Krümmung derartig, daß sie ihren tiefsten Punkt bei dem halben Radius der von dem Dosierrotor überstrichenen Kreisfläche besitzt und symmetrisch zu diesem tiefsten Punkt ist. Auf diese Weise wird Material sowohl von den Enden des Dosierrotors als auch von dessen Drehachse weggeführt.

Vorzugsweise weist der Dosierrotor genau zwei Flügel auf. So kann die Gesamtoberfläche des Dosierrotors möglichst gering gehalten werden, um zu vermeiden, daß sich Material auf den Rotorflügeln ansammelt. Denn eine solche Ablagerung von Material auf den Rotorflügeln kann zu einer Brückenbildung von Material führen, wodurch die freie Zugangsfläche des Dosierers für nachkommendes Material verringert wird bzw. bei einer Aufschaukelung des Effektes eine komplette Verstopfung des Dosierers eintreten kann.

Die Öffnung in der Grundplatte des Dosierers ist vorzugsweise derartig angeordnet, daß sie nur von einem Teil einer Hälfte der von dem Dosierrotor überstrichenen Kreisfläche überlagert ist.

Ferner kann erfindungsgemäß vorgesehen sein, daß zwischen dem ersten Dosierrotor und der Grundplatte ein zweiter Dosierrotor angeordnet ist, der zwei Flügel besitzt und konvexe Seitenkanten aufweist, so daß die Form des zweiten Dosierrotors etwa einer Ellipse ähnelt. Vorzugsweise überstreichen dessen Flügel nicht die Öffnung der Grundplatte. Aufgrund der konvexen Krümmung der Seitenkanten des zweiten Dosierrotors wird das Material bei Drehung des Dosierrotors von der gemeinsamen Drehachse des ersten und des zweiten Dosierrotors weggeführt. Somit wird verhindert, daß sich Material an der Welle des Dosierrotors anlagern und zu einer Beschädigung der Wellenlagerung und einer vor Eintritt von Flüssigkeit in die Lagerung schützenden Dichtung der Welle führen kann. Dies ist insbesondere wichtig, wenn es sich bei dem Material um krankenhausspezifische Abfälle, wie z. B. Spritzen, handelt, die einer Hochtemperaturdesinfektions- bzw. Hochtemperatursterilisationsvorrichtung zugeführt werden.

Es kann auch vorgesehen sein, daß der zweite Dosierrotor nur einen Flügel aufweist, dessen gewölbte Seitenkanten jedoch im wesentlichen der Form eines Flügels des zweiflügeligen Dosierrotors entsprechen, wobei sicherzustellen ist, daß die Wellendichtung vollständig von dem Flügel umfaßt ist. Auch ein solcher Dosierrotor bewirkt grundsätzlich den gleichen Effekt, Ist jedoch natürlich nicht so effektiv wie ein zweiflügeliger Dosierrotor.

Ferner kann erfindungsgemäß vorgesehen sein, daß auf dem ersten Dosierrotor mittig ein Aufsatz angeordnet ist, der sich zu dem Dosierrotor hin kegelähnlich verbreitert. Dieser Aufsatz kann seitlich zwei blattförmige Mitnehmer aufweisen, die in Richtung der Längsachse des Aufsatzes ausgerichtet sind. Die kegelähnliche Form des Aufsatzes sorgt dafür, daß zuzuführendes Material nicht in den Bereich des Dosierrotors nahe der Welle gelangt, in dem aufgrund des geringen Abstandes zur Drehachse eine so geringe Drehgeschwindigkeit vorhanden ist, daß eine Ablagerung von Material wahrscheinlich wäre. Die Mitnehmerblätter des Aufsatzes tragen ebenfalls dazu bei, daß das Material in diesem Bereich abgewiesen wird.

Auf jedem Flügel des ersten Dosierrotors kann ebenfalls jeweils ein blattartiger Mitnehmer angeordnet sein, der sich etwa über die gesamte Länge des Rotorflügels erstrecken kann, und einen rechten Winkel mit diesem einnimmt. Dieser Mitnehmer gewährleistet, daß der jeweilige Flügel des Dosierrotors die gewünschte Angriffsfläche gegenüber dem zuzuführenden Material bietet.

Die Erfindung umfaßt auch eine Vorrichtung zur Behandlung von kontaminierten Materialien in einer Behandlungskammer durch Desinfektion oder Sterilisation, wobei die Vorrichtung einen Dosierer aufweist, wie er vorhergehend beschrieben ist. Bei den kontaminierten Materialien kann es sich insbesondere um Krankenhausabfälle handeln, die der Behandlungskammer über einen Einlaßtrichter und einen Zerkleinerer mittels des Dosierers zugeführt werden, wobei in der Behandlungskammer eine Förderschnecke angeordnet ist. Dabei gewährleistet der zwischengeschaltete Dosierer ein problemloses Befüllen der Behandlungskammer, insbesondere sorgt der Dosierer für einen optimalen Füllstand in der Behandlungskammer.

Im folgenden wird die Erfindung anhand eines Ausführungsbeispiels des erfindungsgemäßen Dosierers näher erläutert, wobei auf die Figuren Bezug genommen wird. Es zeigen:
Figur 1, eine Draufsicht auf einen erfindungsgemäßen Dosierer;
Figur 2, eine Schnittansicht des Dosierers gemäß Figur 1 und eine Teilansicht einer den Dosierer aufweisenden Sterilisationsvorrichtung.

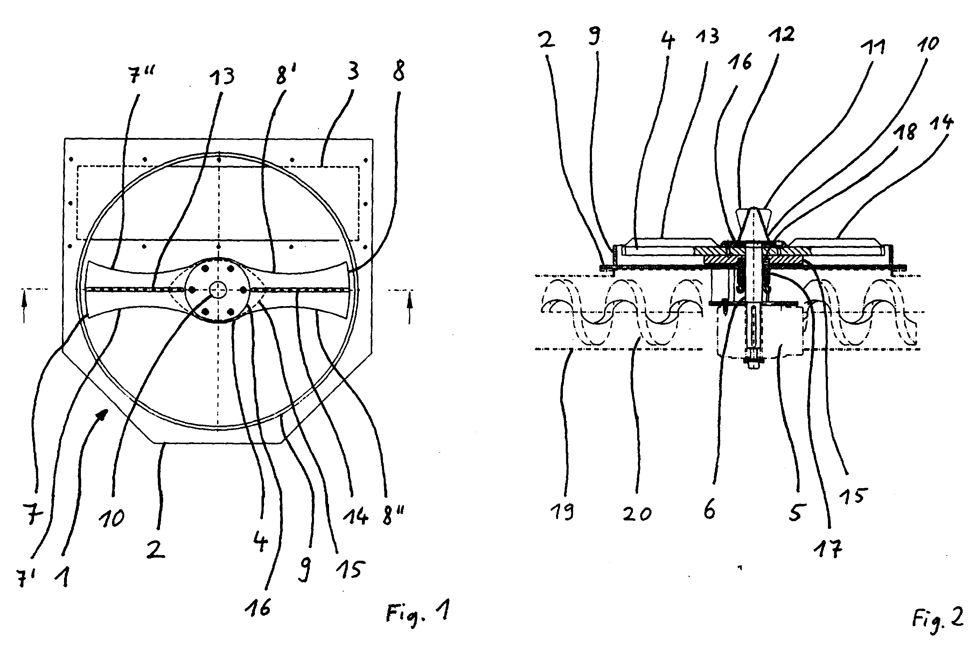

Figur 1 zeigt einen Dosierer 1 mit einer Grundplatte 2, die eine Öffnung 3 zum Austrag von Material aus dem Dosierer 1 aufweist. Oberhalb der Grundplatte 2 ist ein erster Dosierrotor 4 angeordnet, der durch einen Antrieb 5 übereine Welle 6 bewegt wird (siehe Figur 2).

Der Dosierrotor 4 weist zwei Flügel 7 bzw. 8 auf, die sich mit ihren äußeren Enden bei Drehung des Dosierrotors 4 nahe entlang eines Gehäuseringes 9 bewegen. Die Seltenkanten 7' und 7'' des Flügels 7 bzw. 8' und 8'' des Flügels 8 sind konkav gekrümmt.

Auf dem Dosierrotor 4 ist über dem Bereich, an dem der Dosierrotor 4 an der Welle 6 befestigt ist, ein Aufsatz 10 angebracht, der im wesentlichen eine kegelähnliche Form besitzt. Auf dem Mantel des Kegels 10 sind Mitnehmerblätter 11 und 12 angeordnet, deren Angriffsflächen parallel zur Drehachse des Dosierrotors 4 ausgerichtet sind.

Ferner befindet sich auf jedem Flügel 7, 8 des Dosierrotors 4 jeweils ein Mitnehmer 13 bzw. 14, der sich etwa über die gesamte Länge des jeweiligen Flügels 7, 8 erstreckt und in einem rechten Winkel zu dem Flügel 7 bzw. 8 angeordnet ist. Somit bieten die Mitnehmer bei Drehung des Dosierrotors 4 zusätzliche Angriffsflächen für das zuzuführende Material.

Zwischen dem Dosierrotor 4 und der Grundplatte 2 befindet sich, ebenfalls von der Welle 6 angetrieben, ein zweiter Dosierrotor 15. Dieser Dosierrotor 15 weist konvex gekrümmte Seitenkanten auf. Die maximale Ausdehnung des zweiten Dosierrotors 15 ist etwa so bemessen, daß er bei entsprechender Drehposition bis zum Rand der Austragsöffnung 3 reicht.

Wie insbesondere in Figur 2 zu erkennen ist, ist der Dosierrotor 1 an der Welle 6 mittels eines Verbindungsteils 16 befestigt. Die Welle 6 wird durch eine Lagerung 17 gehalten. Eine Wellendichtung 18 dichtet die Wellenlagerung 17 gegen Flüssigkeitseintritt ab. Die Wellendichtung 18 ist durch den sie umgebenden zweiten Dosierflügel 15 geschützt. Ferner ist in Figur 2 gestrichelt teilweise eine Behandlungskammer 19 einer Desinfektions- bzw. Sterilisationsvorrichtung dargestellt. In der Behandlungskammer 19 befindet sich eine Förderschnecke 20.

Durch die Förderschnecke 20 wird das Material, das über den Dosierer 1 der Behandlungskammer 19 zugeführt wird, zu einem Auslaß (nicht gezeigt) der Behandlungskammer 19 befördert. Mittels eines Heizelementes (nicht gezeigt) wird die zur Desinfektion bzw. Sterilisation des kontaminierten Materials benötigte Temperatur in der Behandlungskammer 19 erzeugt. Über einen Anschluß der Behandlungskammer 19 kann gegebenenfalls Flüssigkeit zugeführt werden, um die erforderliche Dampfmenge sicherzustellen. Die Behandlungskammer weist sowohl an dem Ende des Einlasses als auch an dem Ende des Auslasses jeweils nicht gezeigte Mittel zur Abdichtung der Behandlungskammer 19 auf, um in ihr den für die Behandlung des Materials nötigen Überdruck zu erzeugen. Hierzu kann beispielsweise ein einfacher Schieber oder auch eine Druckschleuse verwendet werden. Bei Verwendung einer Druckschleuse ist ein kontinuierlicher Betrieb der Vorrichtung möglich. Die Fördergeschwindigkeit innerhalb der Behandlungskammer 19 ist entsprechend der für den Behandlungsprozeß benötigten Verweildauer des Materials in der Behandlungskammer 19 ausgelegt.

Bei dem zu behandelnden Material kann es sich beispielsweise um Krankenhausabfälle handeln. In diesem Fall ist es von Vorteil, das Material mittels eines Shredders zu zerkleinern, bevor es in den Dosierer 1 gelangt. Die konvexe Krümmung der Seitenkanten 7', 7'', 8', 8'' des Dosierrotors 4 sorgen dafür, daß Material, das sich in dem Dosierer 1 befindet, bei Drehung des Dosierrotors 4 von dem Gehäusering 9 nach innen geräumt wird. Ferner wird Material, das sich zunächst in der Nähe des Aufsatzes 10 befindet, einerseits ebenfalls durch die konvexe Krümmung der Seitenkanten des Dosierrotors 4, andererseits aber auch durch den zweiten Dosierrotor 15 radial nach außen von dem Bereich, in dem der Dosierrotor 4 an der Welle 8 befestigt ist weggeschoben. Dazu trägt ebenfalls der kegelähnliche Aufsatz 10 bei, der verhindert, daß Material, das dem Dosierer 1 zugeführt wird, sich unmittelbar im Verbindungsbereich des Dosierflügels 4 und der Welle 6 ansammelt.

Grundsätzlich ist es auch möglich, einen Dosierrotor 4 vorzusehen, der nur einen Flügel aufweist. Während bei der beschriebenen Ausführungsform der Erfindung vorgesehen ist, daß die Drehrichtung der Dosierrotoren 4, 15 gewechselt werden kann, ist es natürlich auch möglich, nur eine Drehrichtung vorzusehen, wobei dann nur eine Seitenkante des jeweiligen Flügels 7 bzw. 8 des Dosierrotors 4 konkav gekrümmt sein muß. Wenn nur eine Drehrichtung des Dosierrotors 4 vorgesehen ist, können die Flügel 7 bzw. 8 des Dosierrotors 4 auch beispielsweise als senkrecht zu der Grundplatte 2 angeordnete gekrümmte Blätter ausgebildet sein.

## Patentansprüche

1. Dosierer (1) zur Zufuhr von Material, insbesondere von Feststoffen, in eine Anlage zur Be- und/oder Verarbeitung des zugeführten Materials, mit einer Grundplatte (2), die eine Öffnung (3) aufweist, und einem oberhalb der Öffnung (3) angeordneten Dosierrotor (4) mit einem oder mehreren Flügeln (7, 8), deren jeweiliges äußeres Ende einer kreisförmig angeordneten Wandung (9) gegenüberliegt, dadurch gekennzeichnet, daß jeder Flügel (7,8) des Dosierrotors (4) eine konkav gekrümmte Seitenkante (7', 7'', 8', 8'') aufweist, die bei Drehung des Dosierrotors (4) auf das zuzuführende Material Kräfte ausübt.

2. Dosierer nach Anspruch 1, dadurch gekennzeichnet, daß der Dosierrotor (4) genau zwei Flügel (7,8) aufweist.

3. Dosierer nach Anspruch 1 oder 2, dadurch gekennzeichnet, daß die Öffnung (3) nur von einem Teil einer Hälfte dervon dem Dosierrotor (4) überstrichenen Kreisfläche überlagert ist.

4. Dosierer nach einem der vorhergehenden Ansprüche, dadurch gekennzeichnet, daß zwischen dem Dosierrotor (4) und der Grundplatte (2) ein zweiter Dosierrotor (15) mit zwei Flügeln angeordnet ist, der konvexe Seitenkanten aufweist und dessen Flügel eine Kreisfläche überstreichen, die nur die Grundplatte (2) überlagert.

5. Dosierer nach einem der vorhergehenden Ansprüche, dadurch gekennzeichnet, daß zentriert auf dem ersten Dosierrotor (4) ein sich zu diesem hin verbreiternder kegelähnlicher Aufsatz (10) angeordnet ist.

6. Dosierer nach Anspruch 5, dadurch gekennzeichnet, daß der Aufsatz (10) zwei seitlich angeordnete Mitnehmerblätter (11, 12) aufweist.

7. Dosierer nach einem der vorhergehenden Ansprüche, dadurch gekennzeichnet, daß der erste Dosierrotor (4) auf jedem Flügel (7, 8) einen Mitnehmer (13, 14) mit einer im rechten Winkel zum Flügel (7, 8) angeordneten Angriffsfläche aufweist.

8. Vorrichtung zur Behandlung von kontaminierten Materialien in einer Behandlungskammer (19) durch Desinfektion oder Sterilisation, aufweisend einen Dosierer (1) nach einem der vorhergehenden Ansprüche.
